# EUROPEAN PATENT APPLICATION

(11) **EP 1 321 347 A2**
(43) Date of publication of application: **25.06.2003**
(21) Application number: 02027291.0
(22) Date of filing: 06.12.2002
(51) Int. Cl.: B62D 5/04

(54) **Electric power steering apparatus**

(30) Priority: 07.12.2001 JP 2001374172
(71) Applicant: NSK LTD.,, Shinagawa-ku, Tokyo 141-8560 (JP)
(72) Inventor: Itakura, Yusuke c/o NSK Ltd., Gunma 371-8527 (JP)
(74) Representative: Klunker . Schmitt-Nilson . Hirsch

(57) **Abstract**

In an electric power steering apparatus adapted to control a motor which provides a steering mechanism with a steering assist on the basis of a steering assist command value operated, by operating means, based on a steering torque and vehicle speed and a current control value operated from a motor current value, a function is provided to apply a limitation to the assist and continue the assist in the event of aminor trouble not requiring to shut down a system. Upon the trouble, a characteristic gain of the current control value to the steering torque is limited by 1/n, and a limitation target value is provided to the 1/n of limitation characteristic.

## Description

### BACKGROUND OF THE INVENTION

### 1. Field of the Invention

The present invention relates to an electric power steering apparatus adapted to provide a steering assist force by a motor to a steering system of an automobile or vehicle, and more particularly to an electric power steering apparatus adapted to provide a variable gain to an output, as a technique of assist(steering assist) limitation.

### 2. Description of the Related Art

An electric power steering apparatus, for assist-loadurging the automotive or vehicular steering unit by a motor rotation force, is adapted to assist-load-urge a motor drive force onto a steering shaft or rack shaft by a transmission mechanism, such as gears or belts, through reduction gears. In such a conventional electric power steering apparatus, a feedback control of motor current is made in order to correctly generate an assist torque(steering assist torque). The feedback control is to regulate a motor application voltage to reduce a difference between a current control value and a motor current detection value. Regulating the motor application voltage is generally made by duty-ratio adjustment in PWM (pulse width modulation) control.

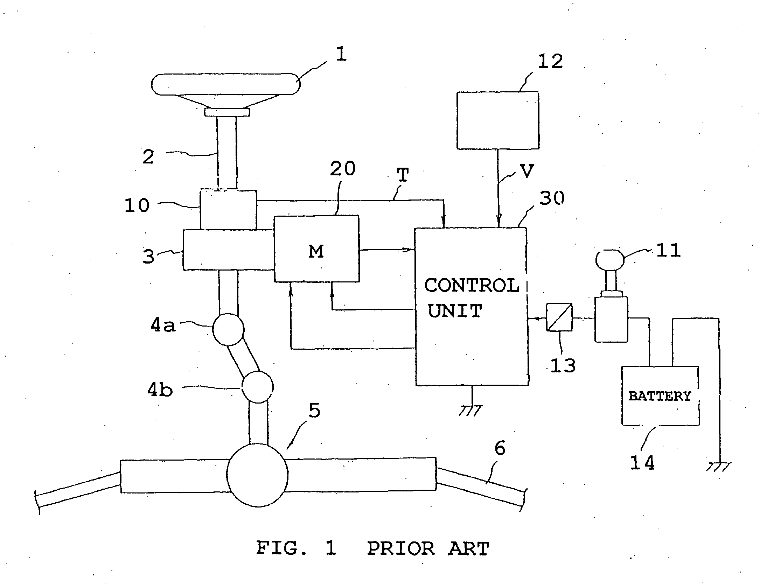

'Explaining herein a general structure of an electric power steering apparatus by showing in FIG. 1, a shaft 2 of a steering wheel 1 is coupled to tie rods 6 of wheels through reduction gears 3, universal joints 4a and 4b and a pinion-and-rack mechanism 5. On the shaft 2 is provided a torque sensor 10 to detect a steering torque of the steering wheel 1. A motor 20, for assisting a steering force to the steering wheel 1, is coupled to the shaft 2 through the reduction gears 3. To a control unit 30 for control of the power steering apparatus, an electric power is supplied from a battery 14 through an ignition key 11 and a relay 13. The control unit 30 operates a steering assist command value I for an assist command on the basis of a steering torque T detected by the torque sensor 10 and a vehicle speed V detected by a vehicle speed sensor 12, and controls a current to be supplied to the motor 20 on the basis of an operated steering assist command value I.

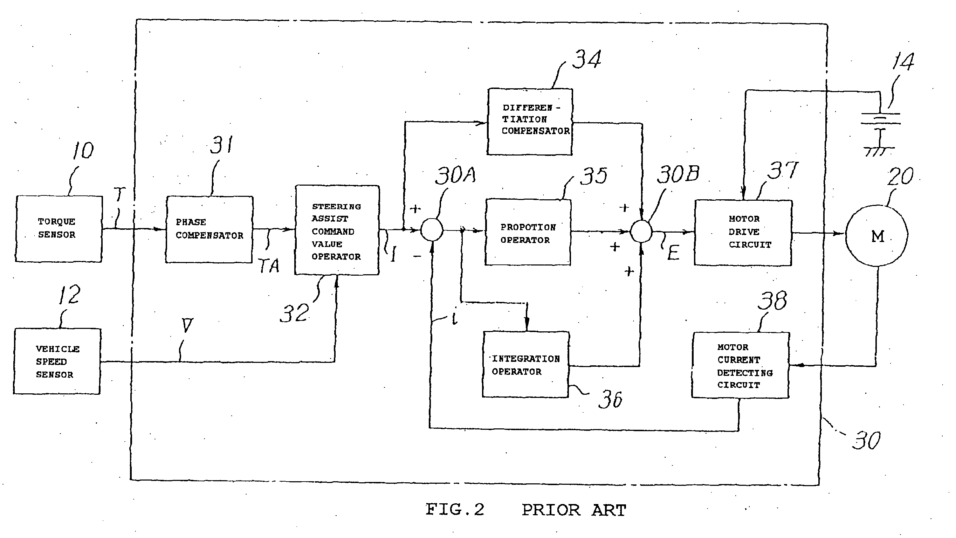

The control unit 30 is mainly configured by a CPU(Central Processing Unit). Within the CPU(or MCU: Micro Controller Unit), a general function to be executed by a program if shown is as in FIG. 2. For example, a phase compensator 31 does not show a phase compensator as independent hardware but shows a phase compensating function to be executed in the CPU (or MCU).

Explaining the function and operation of the control unit 30, a steering torque T detected and inputted by the torque sensor 10 is phase-compensated by the phase compensator 31 in order to enhance the stability of a steering system. A phase-compensated steering torque TA is inputted to a steering assist command value operator 32. Also, a vehicle speed V detected by the vehicle speed sensor 12 is inputted to the steering assist command value operator 32. The steering assist command value operator 32 determines a steering assist command value I as a control target value of a current to be supplied to the motor 20, on the basis of the inputted steering torque TA and vehicle speed V. The steering assist command value I is inputted to a subtracter 30A and to a differentiating compensator 34 of a feed-forward system for enhancing response speed. A difference (I - i) by the subtracter 30A is inputted to a proportion operator 35 and to an integration operator 36 for improving a feedback system characteristic. The outputs of the differentiation compensator 34 and the integration compensator 36 are also addition-inputted to an adder 30B. A current control value E, as an addition result in the adder 30B, is inputted as a motor drive signal to a motor drive circuit 37. A motor current value "i" of the motor 20 is detected by a motor current detecting circuit 38, and the motor current value "i" is inputted to the subtracter 30A, thus being fed back.

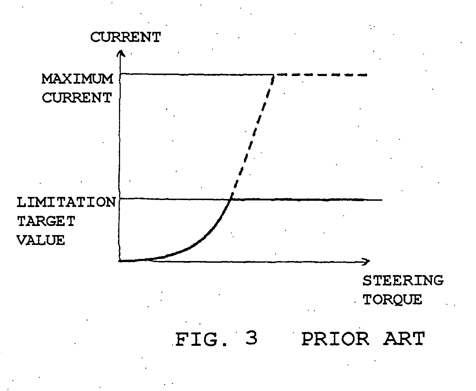

In an electric power steering apparatus as in the above, the motor generates heat by such excessive use of the motor as continuously flowing a large amount of current to the motor due to repeatedly putting into an garage for a long time, causing a danger of fuming and further motor burn out. With respect to such a problem, it is a conventional practice to assume a motor-winding temperature and carry out temperature protection control, as in Japanese Patent Application Laid-open No.10-100913 A. When carrying out such protection control, provided is a limiter having a characteristic as shown in FIG. 3 not to flow a constant amount or more of current to the motor in order to decrease the motor temperature, thereby limiting a maximum current value. Also, besides temperature protection, quite similar assist limitation has been carried out for a minor trouble allowing to continue the assist of among various abnormalities to be detected by a control device.

However, in the case, as shown in FIG. 3, a maximum current value is limited not to flow a constant current or more, the steering characteristic of the power steering apparatus is set with a maximum current with respect to a secondary function. Consequently, limitation is not applied so much in a region an input steering.torque is small, so that limitation acts only within a range great in steering torque. Namely, in a region the input torque is small wherein the limitation is ineffective, usual steering is possible and operation is made similarly to upon the normal. However, in a region the steering torque is great, the limitation suddenly acts due to a limitation target value, hence posing a great feeling of physical disorder to the driver. In case replacing with a sensuous representation, light and smooth steering is available outside the limitation range of the limitation target value. However, as soon as entering the limitation region, the steering wheel becomes suddenly heavy and not smooth in operation whereby the driver has a feeling of physical disorder as if the tire hits against and is pushed by a wall.

Such a feeling of physical disorder greatly spoils product value. It can be considered that the occurrence of a feeling of physical disorder is suppressed by limiting a limiting value in stages. However, although effect is available with a small limiting value, there is a problem that a feeling of physical disorder cannot be suppressed from occurring when the limitation value increases to a point the finally expected assist limitation is given.

### SUMMARY OF THE INVENTION

The present invention has been made by the above circumstance. It is an object of the present invention to provide an electric power steering apparatus capable of smoothly giving an assist limitation without making heavy a feeling of steering and moreover without causing, to a driver, a sudden feeling of physical disorder.

The present invention is concerned with an electric power steering apparatus adapted to control a motor which provides a steering mechanism with an assist on the basis of a steering assist command value operated, by operating means, based on a steering torque and vehicle speed and a current control value operated from a motor current value. The above object of the present invention is achieved by: providing a function to apply a limitation to the assist and continue the assist in the event of a minor trouble not requiring to shut down a system, to limit a characteristic gain of the current control value to the steering torque by 1/n during the trouble and to provide a limitation target value to the 1/n of limitation characteristic.

### BRIEF DESCRIPTION OF THE DRAWINGS

In the accompanying drawings:
FIG. 1 is a block configuration view showing one example of an electric power steering apparatus;
FIG. 2 is a block diagram showing a general internal configuration of a control unit;
FIG. 3 is a view for explaining a conventional current limitation;
FIG. 4 is a block diagram showing a configuration example of the present invention;
FIG. 5 is a flowchart showing an operation example of the present invention;
FIG. 6 is a view showing an operation of current limitation by the present invention; and
FIG. 7 is a view showing an operation of current limitation by the present invention.

### DESCRIPTION OF THE PREFERRED EMBODIMENTS

In the present invention, a function is provided to apply a limitation to an assist and to continue the assist in the event of a minor trouble not requiring system shut down. Namely, upon a trouble, a characteristic gain of the current control value to the steering torque is limited by 1/n. Consequently, an assist limitation can be smoothly given without making heavy a feeling of steering and moreover without causing, to a driver, a sudden feeling of physical disorder.

Hereunder, an embodiment of the present invention is explained with reference to the drawings.

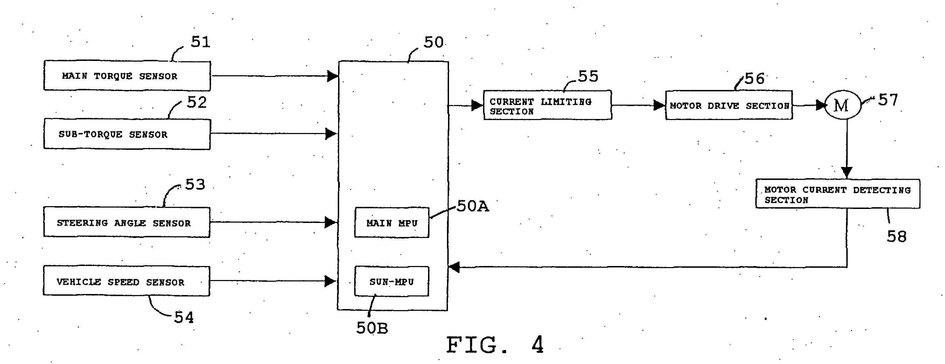

FIG. 4 shows a configuration example of the present invention, wherein a steering torque detection signal detected by a main torque sensor 51 or sub-torque sensor 52, a steering angle signal detected by a steering angle sensor 53 and a vehicle speed signal detected by a vehicle speed sensor 54 are respectively inputted to a control section 50. The control section 50 has a main MPU(Micro Processor Unit or MCU: Micro Controller Unit) 50A and a sub-MPU 50B, which operates a steering assist command value on the basis of a torque detection signal and vehicle speed signal and drive-controls a motor 57 through a current limiting section 55 for limiting a current and a motor drive section 56. The current of the motor 57 is detected by a motor current detecting section 58 and fed back to the control section 50.

In the meanwhile, in the case the control section 50 detects a minor trouble that assist is to be continued, e.g. in the case of detecting a trouble in a part for additional control such as a trouble in the sub-torque sensor 52, a trouble in the steering angle sensor 53, a trouble in the vehicle speed sensor 54 or a trouble in the sub-MPU 50B, there is a case that assist can be limitedly continued despite full assist in 100% cannot be effected due to the trouble in that part. For example, in case the sub-torque sensor 52 is out of order, control is possible with only the main torque sensor 51. However, in the case that the main torque sensor 51 next goes out of order, it is dangerous to suddenly go out of assist. Accordingly, as shown in FIG. 3, control can be continued by limiting assist to a certain extent(by burdening steering wheel).

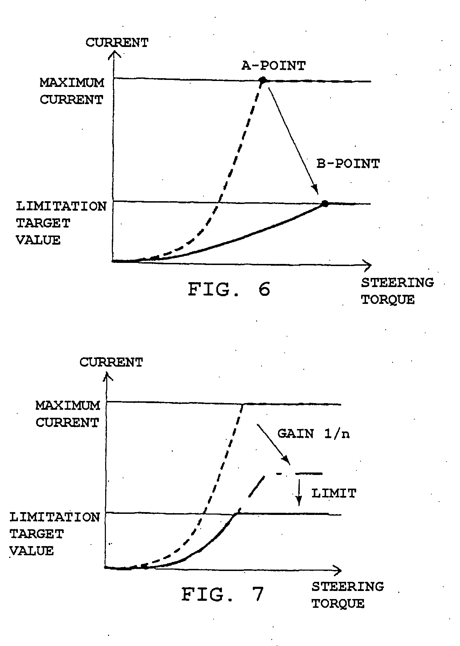

FIG. 6 shows a characteristic of a current (steering control value) with respect to an input steering torque, wherein the entire is calculated with 1/n on a conventional gain characteristic so that a maximum current comes to a limitation target value. Due to this, assist is possible to carry out over a broad region of steering torque.

Meanwhile, even in case the steering angle sensor 53 goes out of order, control is possible only by the torque sensor 51 or 52. However, in the case the steering angle sensor 53 goes out of order, it becomes impossible to realize a compensation function using a steering angle signal as an output of the steering angle sensor 53. In this case, because of a design, by nature, of an assist characteristic assuming a compensation function using the steering angle sensor 53, the absence of a steering signal greatly lowers the steering feeling. Accordingly, it is possible to continue control by limiting the assist to a certain extent(by burdening the steering wheel) as shown in FIG. 6 in a manner correcting for the lower in the steering feeling. Concerning the vehicle speed sensor 54, because a vehicle-speed response function (varying the steering force responsive to a vehicle speed) becomes ineffective, it is possible to continue control by limiting the assist to a certain extent (by burdening the steering wheel) as shown in FIG. 6 to provide a steering characteristic that travel is possible over the entire vehicle speed range by one steering characteristic. In general, light steering feeling is preferred as vehicle speed is lower while heavy steering feeling is as the vehicle speed is higher. In particular, because electric power steering is higher in controllability(easier in varying the control characteristic) as compared to hydraulic power steering, a broad control width is provided in accordance with a vehicle speed. In such a broad control range of electric power steering, in case traveling is at high speed with the lightest steering setting, a remarkable feeling of incongruity occurs and there is no value as product.

Meanwhile, in a system mounting the sub-MPU 50B to detect an abnormality in an operating system of the main MPU 50A as shown in FIG. 4, even when the sub-MPU 50B goes out of order, the basic function can be realized only by the main MPU 50A. Accordingly, in the event of a trouble occurrence in the main MPU 50A, control can be continued by limiting the assist(burdening the steering wheel).

In a minor trouble as in the above, such an assist limiting target value (steering assist command value) as not exerting an effect of the trouble part is previously, empirically determined to provide a steering characteristic with a gain such that the final motor current output becomes a limitation value of target value. In order to provide a steering characteristic with a gain, it is provided to a final motor current command value as in the current limiting section 55 of FIG. 4. Otherwise, provision is with an operation intermediate value of the control section 50 such that a final motor current output becomes a limitation value of the target value. Meanwhile, in the case that there is a great difference between a usual as sist characteristic and an after-limitation assist characteristic, providing a limitation at one time causes the driver to have a physical disorder feeling. Accordingly, it is effective to take a final limitation value as a target and gradually decrease the gain by stages or continuously in a degree free of a feeling of physical disorder.

Meanwhile, in temperature protection control upon motor heating up, a current value for continuous energization to the motor 57 is taken as an assist limitation target value at a start of protection control. In order not to increase the difference between the usual assist characteristic and the after-limitation assist characteristic, the gain is gradually decreased by stages or continuously in a degree for the driver not to feel physical disorder. By thus controlling, the assist limitation can be gradually effected to prevent against a feeling of physical disorder at a start of limitation. Also, the limitation with a gain does not cause limited and non-limited portions to provide a heavy feeling of steering as a whole, thus preventing against occurrence of a feeling of physical disorder due to a steering condition. By a limitation with a gain calculation (1/n), an assist effect is available over a broad range as compared to the case of limitation with a maximum limit(FIG. 3).

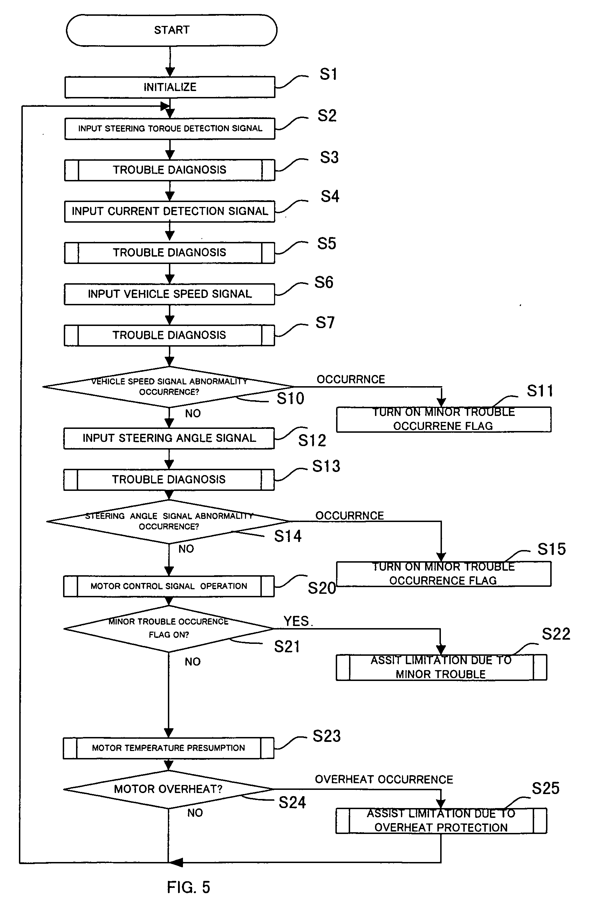

In a structure like this, the operation thereof is explained with reference to a flowchart of FIG. 5.

First, an initialization is carried out(Step S1), and a steering torque detection signal is inputted from the torque sensors 51 and 52(Step S2). Trouble diagnosis is conducted based on the steering torque detection signal(Step S3). Furthermore, a current detection signal is inputted from the motor current detecting section 58(Step S4) to conduct the trouble diagnosis based on the current detection signal(Step S5). Thereafter, a vehicle speed signal is inputted from the vehicle speed sensor 54(Step S6) to conduct the trouble diagnosis based on a vehicle speed signal (Step S7). In the case of adiagnosis as a trouble in each of the above trouble diagnoses, the system is shut down in any of the cases.

In the case of determination as normal in every trouble diagnosis, determination is made whether there is an occurrence of abnormality in the vehicle speed signal from the vehicle speed sensor 54 (Step S10). In the case of an occurrence, a minor trouble occurrence flag is turned-ON(Step S11). Thereafter or in the case of no occurrence of abnormality in the vehicle speed signal, .a steering angle signal is inputted from the steering angle sensor 53 (Step S12) to conduct the trouble diagnosis based on a steering angle signal (Step S13). In the case of no trouble occurrence, determination is further made whether there is an occurrence of abnormality in the steering angle signal or not (Step S14). In the case of an occurrence of abnormality in the steering angle signal, a minor trouble occurrence flag is turned-ON(Step S15) to operate a motor control signal(Step S20).

Thereafter, determination is made whether the minor trouble occurrence flag is "ON" or not (Step S21). In the case the minor trouble occurrence flag is "ON", an assist due to minor trouble is limited(Step S22). In the case the minor trouble. occurrence flag is not "ON", a motor temperature is presumed on the basis of a motor current and the like (Step S23). Then, the determination is made whether the motor temperature is overheated or not(Step S24). In the case of overheating, carried out is assist limitation due to overheat protection(Step S25), and the process returns to the Step S2.

As shown in FIG. 6, there is a case that a steering force becomes excessively heavy in case limitation is evenly applied with a gain. For this reason, in order to make compatible both a target limitation value and a steering force, it is effective to provide a limitation to a maximum value(limitation target value setting) on a gain characteristic due to 1/n calculation as shown in FIG. 7. In this case, a torque region where assist is possible is somewhat narrowed as compared to FIG. 6.

As described above, according to the present invention, a function is provided to apply a limitation to an assist and continue the assist in the event of a minor trouble not requiring to shut down a system. Namely, upon a trouble, a characteristic gain of the current control value to the steering torque is limited by 1/n. Consequently, an assist limitation can be smoothly given without making heavy a feeling of steering and moreover without causing for a driver to have a sudden feeling of physical disorder.

In the case that a characteristic gain is limited by 1/n and a limitation target value is set, the above effect is obtained without making heavy a steering force.

## Claims

1. An electric power steering apparatus which is adapted to control a motor which provides a steering mechanism with an assist on the basis of a steering assist command value operated by an operating means based on a steering torque and a vehicle. speed and a current control value operated from a motor current value,
wherein said electric power steering apparatus has a function to apply a limitation to the assist arid to continue the assist in the event of a minor trouble not requiring to shut down a system, to limit a characteristic gain of the current control value to the steering torque by 1/n during the trouble and to provide a limitation target value to the 1/n of limitation characteristic.

2. An electric power steering apparatus according to Claim 1, wherein said steering torque is detected by a main torque sensor and a sub torque sensor.

3. An electric power steering apparatus according to Claim 1 or 2, wherein said limitation of characteristic gain is carried out in a current limiting section.

4. An electric power steering apparatus according to Claim 2, wherein a trouble of said sub torque sensor is a minor trouble, and said limitation is carried out when a trouble of said main torque sensor is occurred.

5. An electric power steering apparatus according to any of claims 1-4, wherein said limitation target value is set to a maximum current.

6. Anelectric power steering apparatus according to any of claims 1-5, wherein said limitation of 1/n is gradually decreased.

7. An electric power steering apparatus according to any of claims 1-5, wherein said limitation of 1/n is continuously decreased.

8. An electric power steering apparatus according to any of claims 1-7, wherein a maximum value is set for said limitation target value.
